# FASCICULE DE BREVET EUROPEEN

(11) **EP 1 450 094 B1**
(45) Date de publication et mention de la délivrance du brevet: **30.09.2009**
(21) Numéro de dépôt: 04290385.6
(22) Date de dépôt: 12.02.2004
(51) Int. Cl.: F16L 21/03

(54) **Dispositif d'assemblage de tuyaux cylindriques**
Verbindungsanordnung für zylindrische Rohre
Connection arrangement for cylindrical pipes

(30) Priorité: 19.02.2003 FR 0302198
(43) Date de publication de la demande: 25.08.2004
(73) Titulaire: Participation Gestion Développement Industriel - P.G.D.I.-S.A., 35760 Saint-Grégoire (FR)
(72) Inventeur: Joncoux, Jacques Olivier, 35700 Rennes (FR); Renson, Francois, 35137 Pleumeleuc (FR)
(74) Mandataire: Saint-Marc-Etienne, Christophe Andréas

(56) Documents cités:
- DE-A- 2 233 101
- DE-A- 4 240 883
- DE-A- 19 609 298
- DE-A- 19 827 681
- DE-U- 1 853 047
- DE-U- 1 907 641

## Description

La présente invention concerne un dispositif d'assemblage de tuyaux. Plus précisément, elle concerne un dispositif permettant d'assembler deux tuyaux à base circulaire par emboîtement d'une partie d'extrémité mâle d'un tuyau dans une partie d'extrémité femelle de l'autre tuyau avec ou sans joint d'étanchéité.

Des conduits adaptés à véhiculer des corps fluides tels que gaz, liquides ou particules solides peuvent être constitués d'un assemblage de tuyaux cylindriques de même diamètre mis bout à bout. Un mode d'assemblage de conduit, utilisé par exemple dans le domaine des conduits destinés à véhiculer des gaz de combustion provenant d'un appareil de chauffage à combustion, consiste à ménager aux extrémités des tuyaux des moyens d'assemblage permettant un assemblage des tuyaux par emboîtement. Une partie d'extrémité formant pièce femelle est adaptée à recevoir une partie d'extrémité formant pièce mâle. Ces parties d'extrémité ont généralement des formes cylindriques de diamètres différents de celui du corps du tuyau, le diamètre de la partie d'extrémité mâle étant inférieur au diamètre de la partie d'extrémité femelle.

En fonction de la nature et/ou de la pression du fluide véhiculé dans le conduit, il est ou non nécessaire de mettre en oeuvre un joint d'étanchéité au niveau de la jonction entre deux tuyaux. Un tel joint d'étanchéité est généralement un joint annulaire comme par exemple un joint à lèvres adapté à être comprimé radialement entre la paroi intérieure de la partie d'extrémité femelle et la paroi extérieure de la partie d'extrémité mâle. Un tel joint est par exemple utilisé dans l'assemblage décrit dans le document DE-A-198 27 681. Dans ce document le joint est placé dans une gorge périphérique et prévu pour rendre étanche le jonction entre un tuyau d'extrémité mâle et un tuyau d'extrémité femelle.

Selon qu'un joint d'étanchéité est ou non mis en oeuvre au niveau de la jonction entre les deux tuyaux, les diamètres des parties d'extrémités mâle et femelle doivent être plus ou moins proches. En effet, si aucun joint n'est mis en oeuvre entre ces parties, le diamètre intérieur de la partie d'extrémité femelle doit être presque égal au diamètre extérieur de la partie d'extrémité mâle de manière à ce qu'il n'y ait pas de jeu dans l'emboîtement des pièces mâle et femelle et que par conséquent les tuyaux soient raccordés rigidement. En revanche, lorsqu'un joint est mis en oeuvre, il doit y avoir un certain jeu dans l'emboîtement. En effet, l'écrasement du joint entre les pièces mâles et femelles ne doit pas dépasser un certain stade.

Dans l'état actuel de la technique, les moyens d'assemblage par emboîtement ménagés aux extrémités des tuyaux sont donc différents selon que l'assemblage se fait ou non avec un joint d'étanchéité. En conséquence, pour être en mesure de réaliser tous types de conduits, il faut prévoir, pour un même diamètre nominal, deux types de tuyaux, ce qui alourdit considérablement la fabrication et le stockage de ces tuyaux.

La présente invention a notamment pour but d'apporter une solution à ce problème.

La présente invention concerne un dispositif d'assemblage de tuyaux cylindriques pour assembler deux tuyaux cylindriques par emboîtement sans jeu d'une partie d'extrémité mâle d'un tuyau dans une partie d'extrémité femelle de l'autre tuyau de manière à permettre le maintien radial desdits tuyaux l'un par rapport à l'autre, la partie d'extrémité femelle comportant une gorge périphérique pouvant recevoir un joint d'étanchéité annulaire qui, lorsque ladite partie d'extrémité mâle est emboîtée dans ladite partie d'extrémité femelle, est comprimé radialement entre lesdites parties d'extrémités mâle et femelle, la partie d'extrémité mâle comprenant une première partie cylindrique de diamètre inférieur au diamètre de ladite partie d'extrémité femelle.

Selon l'invention, ladite partie d'extrémité mâle comprend en outre une seconde partie cylindrique située à l'extrémité de la partie d'extrémité mâle et de diamètre inférieur au diamètre de ladite première partie cylindrique, ladite seconde partie cylindrique étant destinée à venir en regard de ladite gorge périphérique.

Lorsque le type de conduit assemblé ne réclame pas la présence de joint d'étanchéité, les tuyaux à dispositif d'assemblage selon l'invention peuvent être néanmoins utilisés puisqu'il n'y a pas de jeu entre la paroi intérieure de la pièce femelle et la paroi extérieure de la pièce mâle, ce qui permet un emboîtement assurant un parfait maintien radial des tuyaux l'un par rapport à l'autre. Si, en revanche, l'assemblage doit se faire avec un joint d'étanchéité, ce joint sera positionné dans la gorge périphérique dont la taille est prévue pour que le joint puisse être comprimé radialement de manière optimale entre ladite partie d'extrémité mâle et ladite partie d'extrémité femelle.

Selon un autre aspect de la présente invention,-ladite partie d'extrémité mâle comprenant un moyen destiné à faciliter la pénétration de ladite partie d'extrémité mâle à l'intérieur dudit joint d'étanchéité.

Avantageusement, ledit moyen destiné à faciliter la pénétration comprend un rétreint ménagé à l'extrémité de ladite partie d'extrémité mâle.

Avantageusement, ladite partie d'extrémité mâle comprend une section de diamètre inférieur destinée à venir en regard de ladite gorge périphérique.

Avantageusement, ladite gorge périphérique a un profil trapézoïdal.

Selon un autre aspect de la présente invention, ledit dispositif d'assemblage de tuyaux cylindriques comprend des moyens de maintien axial desdits tuyaux l'un par rapport à l'autre.

Avantageusement, lesdits moyens de maintien axial desdits tuyaux l'un par rapport à l'autre comprennent une saillie périphérique intervenant sur ladite partie d'extrémité mâle et qui est adaptée à venir porter contre un rebord d'ouverture de ladite partie d'extrémité femelle.

Avantageusement, ladite saillie périphérique a un profil demi-circulaire.

Selon un autre aspect de la présente invention, lesdits moyens de maintien axial desdits tuyaux l'un par rapport à l'autre comprennent un collier de sécurité adapté à serrer ladite saillie périphérique de ladite partie d'extrémité mâle et ledit rebord d'ouverture de ladite partie d'extrémité femelle l'une contre l'autre.

Selon un autre aspect de la présente invention, une partie de pénétration de ladite partie d'extrémité mâle est de longueur légèrement inférieure à la profondeur de ladite partie d'extrémité femelle.

Les caractéristiques de l'invention mentionnées ci-dessus ainsi que d'autres apparaîtront plus clairement à la lecture de la description suivante d'un exemple de réalisation, ladite description étant faite en relation avec les dessins joints, parmi lesquels :
la Fig. 1 représente une vue partielle en coupe des parties mâles et femelles d'un dispositif d'assemblage de tuyaux cylindriques selon l'invention ; et
la Fig. 2 représente une vue partielle en coupe d'un dispositif d'assemblage de tuyaux cylindriques dont les parties mâles et femelles sont assemblées, ainsi que d'un collier de sécurité d'un dispositif d'assemblage selon la présente invention.

Dans l'exemple de réalisation représenté, la présente invention s'applique à un conduit modulaire simple paroi de forme générale cylindrique circulaire. Ce conduit peut être destiné à véhiculer des gaz de combustion, d'autres types de gaz, des liquides, des particules solides et, d'une manière générale, tout corps susceptible d'être véhiculé dans une conduite.

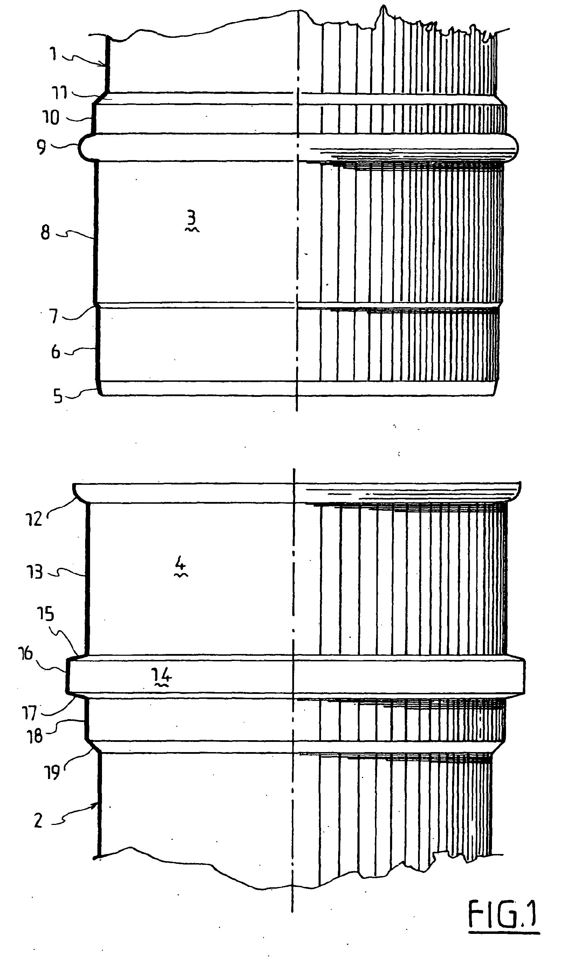

En référence à la Fig. 1, un tuyau 1 et un tuyau 2, de même diamètre nominal, forment éléments du conduit modulaire et sont par conséquent destinés à être assemblés. Chacun de ces tuyaux comporte à ses extrémités des pièces d'assemblage respectivement mâle et femelle. Sur la Fig. 1, on peut voir une partie d'extrémité 3 formant pièce d'assemblage mâle du tuyau 1 ainsi qu'une partie d'extrémité 4 formant pièce d'assemblage femelle du tuyau 2.

La partie d'extrémité mâle 3 est principalement constituée d'une partie cylindrique circulaire 8 de diamètre supérieur au diamètre nominal du tuyau 1. Plus précisément, elle est constituée, à partir du corps du tuyau 1, d'un évasement 11 suivi d'une partie cylindrique circulaire 10 de diamètre égal à celui de la partie 13, d'une saillie périphérique 9 de profil demi-circulaire, de la partie cylindrique circulaire 8, d'un rétreint 7, d'une partie cylindrique circulaire 6 de diamètre inférieur à celui de la partie 8 et à celui du corps du tuyau 1 et enfin, d'un rétreint 5 formant extrémité de la partie d'extrémité mâle 3.

La partie d'extrémité femelle 4 est principalement constituée d'une partie cylindrique circulaire 13 de diamètre supérieur au diamètre nominal du tuyau 2. Plus précisément, elle est constituée, à partir du corps de tuyau 2, d'un évasement 19 suivi d'une partie cylindrique circulaire 18 de diamètre égal à celui de la partie 13, d'un évasement 17, d'une partie cylindrique circulaire 16 de diamètre supérieur à celui des parties 13 et 18, d'un rétreint 15 suivi de la partie 13 et d'un évasement 12 formant rebord de l'ouverture de la partie d'extrémité femelle 4.

Le diamètre extérieur de la partie cylindrique 8 de la partie d'extrémité mâle 3 et le diamètre intérieur des parties cylindriques 13 et 18 de la partie d'extrémité femelle 4 sont adaptés à un emboîtement à jeu minimum permettant le maintien radial desdits tuyaux l'un par rapport à l'autre. Autrement dit, est ainsi réalisée une emboîture rigide, sans jeu.

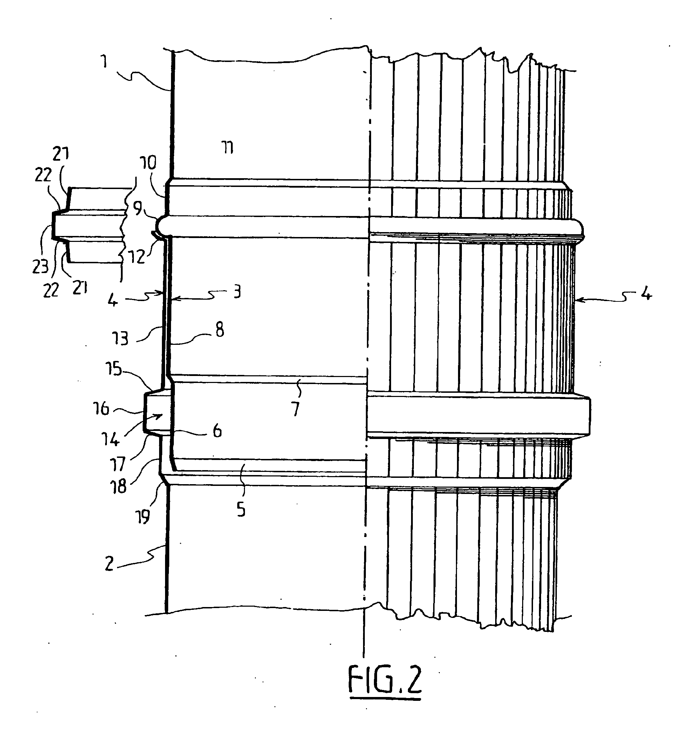

L'évasement 17, la partie cylindrique 16 et le rétreint 15 forment à l'intérieur de la partie d'extrémité femelle 4 une gorge annulaire de profil trapézoïdal 14. Cette gorge périphérique peut recevoir un joint d'étanchéité annulaire, comme par exemple un joint à lèvres. Lorsque, avant assemblage, le joint est inséré dans la gorge 14, le diamètre intérieur de ce joint est inférieur au diamètre des parties cylindriques 13 et 18 de sorte qu'une partie de ce joint fait saillie à l'intérieur de la partie femelle 4. Lorsque la partie d'extrémité mâle 3 est emboîtée dans la partie d'extrémité femelle 4, comme cela est représenté à la Fig. 2, elle s'insère à l'intérieur du joint lequel est alors comprimé radialement entre la gorge 14, d'une part, et la partie cylindrique 6, d'autre part, dont une section proche de la partie 8 se trouve en regard de la gorge annulaire 14 lorsque l'emboîtement est réalisé. Cette partie 6 étant de diamètre légèrement inférieur à la partie 8, un jeu est laissé entre le reste de cette partie 6 et la partie cylindrique 18 de la partie d'extrémité femelle 4.

Le rétreint 5 forme un tronc de cône permettant de faciliter la pénétration de la partie cylindrique 6 dans le joint d'étanchéité de manière à éviter que ce dernier ne soit endommagé.

La saillie périphérique 9 de profil demi-circulaire forme un premier moyen de maintien axial des tuyaux 1 et 2 l'un par rapport à l'autre. Elle est en effet adaptée à venir porter à l'issue de l'emboîtement contre le rebord 12 d'ouverture de la partie d'extrémité femelle.

La longueur de l'ensemble mâle constitué par la partie 8, le rétreint 7, la partie 6 et le rétreint 5 est sensiblement inférieure à la profondeur de l'ensemble femelle jusqu'à l'extrémité de la partie 18 précédant le rétreint 19. Par ailleurs, la profondeur de la partie femelle 13 est légèrement supérieure à la longueur de la partie mâle 8. Enfin, la longueur de l'ensemble mâle constitué par la partie cylindrique 6 et par le rétreint 5 est légèrement plus importante que la profondeur de l'ensemble femelle constitué par la partie cylindrique 18 et la gorge périphérique 14. La partie cylindrique mâle 6 coulisse sans aucun blocage mécanique longitudinal dans l'espace créé entre elle-même et la gorge 14 de la partie d'extrémité femelle 4, le blocage longitudinal de l'assemblage des deux éléments de conduit se faisant par le contact entre la saillie périphérique 9 et le rebord 12.

Un collier de sécurité 23 peut être posé autour de la saillie périphérique 9 pour verrouiller l'assemblage entre les tuyaux 1 et 2. Ce collier a un profil comprenant une partie centrale trapézoïdale avec deux côtés inclinés 22 prolongés chacun par deux bords de moindre inclinaison 21. Le collier 23 est installé de manière à chevaucher la saillie 9, les côtés 22 se trouvant de part et d'autre de cette saillie, l'un d'entre eux se trouvant en regard du rebord incliné 12, et les bords 21 se trouvant en regard l'un de la partie cylindrique 10 de la partie d'extrémité mâle 3, l'autre en regard de la partie cylindrique 13 de la partie d'extrémité femelle 4. Lors du serrage de ce collier, les bords 21 prennent appui sur les parties cylindriques 10 et 13 et les côtés 22 prennent appui l'un sur la saillie 9 et l'autre sur le rebord 12. Le serrage du collier provoque la réduction de son diamètre et l'inclinaison l'un vers l'autre des côtés 22 de ce collier. En conséquence, le rebord 12 va être comprimé contre la saillie 9, ce qui a pour effet d'immobiliser axialement les tuyaux 1 et 2 l'un par rapport à l'autre. Le collier 23 peut être fermé, par exemple, au moyen d'une grenouillère.

## Revendications

1. Dispositif d'assemblage de tuyaux cylindriques pour assembler deux tuyaux cylindriques (1,2) par emboîtement sans jeu d'une partie d'extrémité mâle (3) d'un tuyau (1) dans une partie d'extrémité femelle (4) de l'autre tuyau (2) de manière à permettre le maintien radial desdits tuyaux l'un par rapport à l'autre, la partie d'extrémité femelle (4) comportant une gorge périphérique (14) pouvant recevoir un joint d'étanchéité annulaire qui, lorsque ladite partie d'extrémité mâle (3) est emboîtée dans ladite partie d'extrémité femelle (4), est comprimé radialement entre lesdites parties d'extrémités mâle (3) et femelle (4), la partie d'extrémité mâle (3) comprenant une première partie cylindrique (8) de diamètre inférieur au diamètre de ladite partie d'extrémité femelle (4), **caractérisé en ce que** ladite partie d'extrémité mâle (3) comprend en outre une seconde partie cylindrique (6) située à l'extrémité de la partie d'extrémité mâle (3) et de diamètre inférieur au diamètre de ladite première partie cylindrique (8), ladite seconde partie cylindrique (6) étant destinée à venir en regard de ladite gorge périphérique (14).

2. Dispositif selon la revendication 1, **caractérisé en ce que** ladite partie d'extrémité mâle (3) comprend un moyen (5) destiné à faciliter la pénétration de ladite partie d'extrémité mâle à l'intérieur dudit joint d'étanchéité.

3. Dispositif selon la revendication 2, **caractérisé en ce que** ledit moyen destiné à faciliter la pénétration comprend un rétreint (5) ménagé à l'extrémité de ladite partie d'extrémité mâle (3).

4. Dispositif selon l'une quelconque des revendications précédentes, **caractérisé en ce que** ladite gorge périphérique (14) a un profil trapézoïdal.

5. Dispositif selon l'une quelconque des revendications précédentes, **caractérisé en ce que** ledit dispositif d'assemblage de tuyaux cylindriques comprend des moyens (9, 12, 23) de maintien axial desdits tuyaux (1, 2) l'un par rapport à l'autre.

6. Dispositif selon la revendication 5, **caractérisé en ce que** lesdits moyens de maintien axial desdits tuyaux l'un par rapport à l'autre comprennent une saillie périphérique (9) intervenant sur ladite partie d'extrémité mâle (3) et qui est adaptée à venir porter contre un rebord (12) d'ouverture de ladite partie d'extrémité femelle (4).

7. Dispositif selon la revendication 6, **caractérisé en ce que** ladite saillie périphérique (9) a un profil demi-circulaire.

8. Dispositif selon la revendication 6 ou 7, **caractérisé en ce que** lesdits moyens de maintien axial desdits tuyaux l'un par rapport à l'autre comprennent un collier de sécurité (23) adapté à serrer ladite saillie périphérique (9) de ladite partie d'extrémité mâle (3) et ledit rebord (12) d'ouverture de ladite partie d'extrémité femelle (4) l'une contre l'autre.

9. Dispositif selon l'une quelconque des revendications précédentes, **caractérisé en ce qu'**une partie de pénétration (8, 7, 6, 5) de ladite partie d'extrémité mâle (3) est de longueur légèrement inférieure à la profondeur de ladite partie d'extrémité femelle (4).

## Claims

1. Device for connecting cylindrical pipes in order to join two cylindrical pipes (1, 2) together by fitting a male end portion (3) of one pipe (1) into a female end portion (4) of the other pipe (2), without play, so as to enable the said pipes to be held radially relative to one another, the female end portion (4) comprising a peripheral groove (14) capable of receiving an annular sealing joint which, when the male end portion (3) is fitted into said female end portion (4), is compressed radially between said male (3) and female (4) end portions, the male end portion (3) comprising a first cylindrical portion (8) the diameter of which is smaller than the diameter of said female end portion (4), **characterised in that** the said male end portion (3) further comprises a second cylindrical portion (6) located at the end of the male end portion (3) and of a diameter which is less than the diameter of said first cylindrical portion (8), said second cylindrical portion (6) being intended to be located opposite said peripheral groove (14).

2. Device according to claim 1, **characterised in that** said male end portion (3) comprises means (5) intended to assist the penetration of said male end portion into said sealing joint.

3. Device according to claim 2, **characterised in that** said means intended to assist the penetration comprise a narrowing (5) provided at the end of said male end portion (3).

4. Device according to any one of the preceding claims, **characterised in that** said peripheral groove (14) has a trapezoidal profile.

5. Device according to any one of the preceding claims, **characterised in that** said device for joining cylindrical pipes together comprises means (9,12, 23) for axially holding said pipes (1, 2) relative to one another.

6. Device according to claim 5, **characterised in that** said means for axially holding said pipes relative to one another comprise a peripheral projection (9) acting on said male end portion (3) and adapted to bear on an opening edge (12) of said female end portion (4).

7. Device according to claim 6, **characterised in that** said peripheral projection (9) has a semi-circular profile.

8. Device according to claim 6 or 7, **characterised in that** said means for axially holding said pipes relative to one another comprise a safety collar (23) adapted to clamp said peripheral projection (9) of said male end portion (3) and said opening edge (12) of said female end portion (4) against one another.

9. Device according to any one of the preceding claims, **characterised in that** a penetrating portion (8, 7, 6, 5) of said male end portion (3) is slightly shorter in length than the depth of said female end portion (4).

## Patentansprüche

1. Verbindungsanordnung für zylindrische Rohre zur Verbindung zweier zylindrischer Rohre (1, 2) durch Einfügen eines männlichen Endteils (3) eines Rohres (1) ohne Spiel in ein weibliches Endteil (4) des anderen Rohres (2), zur radialen Halterung der Rohre untereinander, wobei das weibliche Endteil (4) eine periphere Auskehlung (14) umfasst, die ein ringförmiges Dichtungmittel aufnehmen kann, welches bei Einfügung des männlichen Endteils (3) in das weibliche Endteil (4) radial zwischen das männliche Endteil (3) und das weibliche Endteil (4) gepresst wird, wobei das männliche Endteil (3) ein erstes zylindrisches Teil (8) umfasst, das einen geringeren Druchmesser besitzt als der Durchmesser des weiblichen Endteils (4),
**dadurch gekennzeichnet, dass** das männliche Endteil. (3) außerdem ein zweites zylindrisches Teil (6) umfasst, das sich am Ende des männlichen Endteils (3) befindet und einen geringeren Durchmesser besitzt als der Durchmesser des ersten zylindrischen Teils (8), wobei das zweite zylindrische Teil (6) gegenüber der peripheren Auskehlung (14) zur Anlage kommt .

2. Anordnung nach Anspruch 1, **dadurch gekennzeichnet, dass** das männliche Endteil (3) ein Mittel (5) umfasst, welches dazu bestimmt ist, das Eindringen des männlichen Endteils in die Dichtungsverbindung zu erleichtern.

3. Anordnung nach Anspruch 2, **dadurch gekennzeichnet, dass** das Mittel, welches zur Erleichterung des Eindringens bestimmt ist, eine Einschnürung (5) umfasst, die am Ende des männlichen Endteils (3) angeordnet ist.

4. Anordnung nach einem der vorhergehenden Ansprüche,
**dadurch gekennzeichnet, dass** die periphere Auskehlung (14) ein trapezförmiges Profil besitzt.

5. Anordnung nach einem der vorhergehenden Ansprüche,
**dadurch gekennzeichnet, dass** die Verbindungsanordnung für zylindrische Rohre Mittel (9, 12, 23) zur axialen Halterung der Rohre (1, 2) untereinander umfasst.

6. Anordnung nach Anspruch 5, **dadurch gekennzeichnet, dass** die Mittel zur axialen Halterung der Rohre untereinander eine periphere Auskragung (9) umfassen, die an dem männlichen Endteil (3) angeordnet ist, und die geeignet ist, eng an einer Randleiste (12) der Öffnung des weiblichen Endteils (4) zur Anlage zu kommen.

7. Anordnung nach Anspruch 6, **dadurch gekennzeichnet, dass** die periphere Auskragung (9) ein halbkreisförmiges Profil besitzt.

8. Anordnung nach Anspruch 6 oder 7, **dadurch gekennzeichnet, dass** die Mittel zur axialen Halterung der Rohre untereinander einen Sicherheits-Flanschring (23) umfassen, der dazu dient, die periphere Auskragung (9) des männlichen Endteils (3) und die Randleiste (12) der Öffnung des weiblichen Endteils (4) gegeneinanderzupressen.

9. Anordnung nach einem der vorhergehenden Ansprüche,
**dadurch gekennzeichnet, dass** ein Teil zur Einfügung (8, 7, 6, 5) des männlichen Endteils (3) von etwas geringerer Länge ist als die Tiefe des weiblichen Endteils (4).
